# FASCICULE DE BREVET EUROPEEN

(11) **EP 3 865 022 B1**
(45) Date de publication et mention de la délivrance du brevet: **06.09.2023**
(21) Numéro de dépôt: 21156909.0
(22) Date de dépôt: 12.02.2021
(51) Int. Cl.: A47J 31/52, A47J 31/42

(54) **SYSTÈME DE PRÉPARATION DE CAFÉ ET PROCÉDÉ DE COMMANDE D'UN TEL SYSTÈME**
SYSTEM ZUR KAFFEEZUBEREITUNG UND STEUERUNGSVERFAHREN EINES SOLCHEN SYSTEMS
SYSTEM FOR PREPARING COFFEE AND METHOD FOR CONTROLLING SUCH A SYSTEM

(30) Priorité: 12.02.2020 FR 2001390
(43) Date de publication de la demande: 18.08.2021
(73) Titulaire: Reneka International, 67560 Rosheim (FR)
(72) Inventeur: OGUZ, Halil Önder, 83233 Bernau am Chiemsee (DE)
(74) Mandataire: Merckling, Norbert

(56) Documents cités:
- EP-A1- 3 162 256
- EP-A1- 3 542 682
- EP-B1- 2 107 879
- WO-A1-2010/131242
- US-A- 5 417 145
- US-A1- 2016 366 905

## Description

### Domaine technique

L'invention se rapporte au domaine technique général de dispositifs, systèmes ou machines permettant de préparer des boissons chaudes et plus particulièrement du café. De tels systèmes permettent de préparer différents types de café, par exemple des cafés du genre expresso, double expresso, longs ou allongés.

Ces systèmes comprennent en général une machine de préparation de café et un moulin pour préparer la mouture de café à partir de graines de café.

### État de la technique

On connaît des systèmes de préparation de café dans lesquels le poids de la mouture détermine la durée d'écoulement de l'eau chaude à travers ladite mouture. De telles machines présentent cependant un certain nombre d'inconvénients.

En effet, lors de leur utilisation, par exemple dans des environnements différents, la pression atmosphérique, la température, l'humidité, la granulométrie de la mouture, la variété de café, la densité de la mouture peuvent varier. Les conditions de préparation du café sont par conséquent variables. Ceci génère une variation du volume de café obtenu et une qualité optimale ne peut alors être assurée. A titre d'exemple, lorsque la mouture est trop dense, la quantité d'eau la traversant pendant une durée donnée est trop faible. Lorsque la mouture présente une densité trop faible, la quantité d'eau la traversant est trop importante et l'arôme est dégradé. Dans les deux cas on n'obtient pas une qualité constante du produit préparé. Une telle variation dans la qualité du produit préparé n'est pas satisfaisante.

On connaît également, par l'intermédiaire du document EP 3 542 682, un système de préparation de café dans lequel le fonctionnement du moulin consiste à ajuster la finesse de broyage des graines de café et à déterminer le poids de la mouture obtenue pour atteindre la qualité de café recherchée. Une telle approche présente des inconvénients non négligeables. En effet, il est très difficile de se baser sur le degré de finesse de ma mouture dans la mesure où ce degré de finesse ou la granulométrie optimale peut varier substantiellement d'une variété de café à une autre. L'ajustement des meules du moulin consistant à les rapprocher ou à les écarter s'effectue à l'aide d'un moteur qui agit en se basant sur un calcul de moyenne des performances précédentes. Ainsi un café trop fin ou trop gros, même avec un grammage correct, altérera forcément l'écoulement, ce qui n'est pas souhaitable.

### Exposé de l'invention

L'objet de la présente invention vise par conséquent à pallier les inconvénients de l'art antérieur et de proposer un nouveau procédé de commande pour piloter un système de préparation de café, pour améliorer ou conserver dans le temps la qualité du café préparé.

Un autre objet de la présente invention vise à proposer un nouveau procédé de commande dont la mise en oeuvre permet de s'adapter à des contraintes variables de température et de pression atmosphérique pouvant altérer plus ou moins la qualité du café préparé.

Un autre objet de la présente invention vise à proposer un système de préparation de café dont le fonctionnement est optimisé.

Un autre objet de la présente invention vise à fournir un programme d'ordinateur destiné à mettre en oeuvre le procédé de commande conforme à l'invention.

Les objets assignés à l'invention sont atteints à l'aide d'un procédé de commande d'un système de préparation de café comprenant au moins une machine de préparation de café et au moins un moulin pour broyer des graines de café contenues dans un réservoir et fournir au moins une dose d'une mouture destinée à la machine de préparation de café, laquelle est reliée au moulin par l'intermédiaire d'une liaison de communication filaire ou non filaire, caractérisé en ce qu'il comprend les étapes :
e1) sélectionner sur le moulin à l'aide de organes de commande, le type de café souhaité,
e2) sélectionner sur le moulin à l'aide d'organes de commande la ou les portions correspondant au nombre de doses mouture souhaité,
e3) sélectionner des paramètres de fonctionnement initiaux du moulin,
e4) prélever la quantité correspondante de graines de café à partir du réservoir et lancer l'opération de broyage des graines de café, en fonction des paramètres de fonctionnement initiaux du moulin, afin de fournir la mouture,
e5) utiliser le moulin pour transmettre à la machine de préparation de café, une instruction d'activation d'une touche de commande de ladite machine de préparation de café, l'actionnement de ladite touche activée étant compatible avec le type de café et le nombre de doses de la mouture sélectionné, les autres touches de commande de ladite machine de préparation de café restant inactivées,
e6) mesurer le temps d'écoulement M d'une quantité d'eau correspondant aux choix effectué sous e1 et e2), à travers la mouture, suite à l'actionnement de la touche de commande active,
e7) comparer la valeur mesurée M sous e6) à une plage de valeurs de temps de référence VR1, VR2 préenregistrée et déterminer l'écart Δ entre la valeur mesurée M et la première valeur de référence VR1 si M est inférieure à VR1 ou entre la seconde valeur de référence VR2 et M si M est supérieure à VR2, et
e8)-e9) piloter le fonctionnement du moulin en fonction de la comparaison effectuée et/ou de l'écart Δ déterminé sous e7).

Selon un exemple de mise en oeuvre, le procédé consiste à valider les paramètres de fonctionnement du moulin lorsque 1a valeur mesurée M est incluse dans la plage de référence VR1, VR2 ou à modifier lesdits paramètres de fonctionnement du moulin lorsque la valeur mesurée M est inférieure à la première valeur de référence VR1 ou supérieure à la seconde valeur de référence VR2.

Selon l'invention le procédé consiste à augmenter la quantité de mouture en augmentant la durée de prélèvement et de broyage des graines de café si la valeur mesurée M est inférieure à la première valeur de référence VR1 ou diminuer la quantité de mouture en diminuant la durée de prélèvement et de broyage des graines de café si la valeur mesurée M est supérieure à la seconde valeur de référence VR2.

Selon un exemple de mise en oeuvre du procédé, l'augmentation ou la diminution de la quantité de mouture est une fonction mathématique donnant la durée de prélèvement et de broyage en fonction de la valeur de l'écart Δ.

Selon un autre exemple de mise en oeuvre, le procédé l'augmentation ou la diminution de la quantité de mouture est un tableau de correspondance préenregistré donnant les durées de prélèvement et de broyage en fonction de la valeur de l'écart Δ.

Selon un exemple de mise en oeuvre, le procédé consiste à utiliser la liaison de communication pour transmettre des instructions de fonctionnement au moulin à partir de la machine de préparation de café.

Selon un exemple de mise en oeuvre, le procédé consiste à utiliser une unité de commande de la machine de préparation de café et une unité de commande du moulin, comprenant chacune des moyens de réception et d'émission d'informations et/ou d'instructions de commande.

Selon un exemple de mise en oeuvre, le procédé consiste à fournir au moulin des instructions de commandes correctives de manière à modifier pour des sélections données de type de café et de poids de mouture, les paramètres de fonctionnement du moulin pour les opérations de broyages des graines de café.

Selon un exemple de mise en oeuvre, le procédé consiste à utiliser des paramètres de fonctionnement comprenant également le poids de la mouture et/ou d'autres paramètres pouvant être préréglés selon la typologie et les performances du moulin.

Les objets assignés à la présente invention sont atteints également à l'aide d'un produit programme d'ordinateur comprenant des instructions de code de programme, enregistrées sur un support lisible par un ordinateur pour mettre en oeuvre les étapes du procédé présenté ci-dessus, lorsque le programme fonctionne sur un ordinateur.

Les objets assignés à l'invention sont atteints également à l'aide d'un système de préparation de café pour mettre en oeuvre le procédé de commande présenté ci-dessus, comprenant au moins une machine de préparation de café comportant un groupe d'injection, un bloc mécanique et au moins un porte-filtre contenant au moins une dose de mouture et monté de façon amovible sur un porte-coupe du bloc mécanique, une unité de commande pour piloter le fonctionnement de ladite machine de préparation de café, au moins un moulin pour broyer les graines de café et fournir ainsi les moutures, une unité de commande pour piloter le fonctionnement du moulin, ledit système comprenant aussi un système de communication établissant une liaison de communication filaire ou non filaire entre ladite machine de préparation de café et ledit moulin de manière à transmettre des informations et/ou des instructions de la machine de préparation de café au moulin et du moulin à la machine de préparation de café, caractérisé en ce que la machine de préparation de café comprend un dispositif de mesure pour mesurer la durée d'injection durée d'écoulement d'une quantité déterminée d'eau à travers la mouture préparée par le moulin ainsi qu'un débitmètre pour délivrer le volume d'eau adéquat devant traverser la mouture.

Le débitmètre permet ainsi de mesurer un volume d'eau spécifique préréglé pour chaque touche de commande. Une telle mesure est indépendante du temps d'écoulement à travers la mouture et la machine de préparation de café arrête le cycle lorsque le débitmètre aura donné le signal que le volume d'eau programmé aura bien été fourni.

Selon un exemple de réalisation, le moulin comporte un mécanisme de broyage rotatif associé à un dispositif de prélèvement intégrant un dispositif de pesée pour prélever un poids déterminé de graines de café destinées au mécanisme de broyage.

Selon un exemple de réalisation, les unités de commande du moulin et de la machine de préparation de café comprennent chacune une carte électronique comportant une micro-mémoire dans laquelle sont stockés des paramètres physiques et/ou des paramètres de fonctionnement et/ou des valeurs de références VR1, VR2 et/ou des durées de référence d'écoulement d'eau à travers la mouture.

Un avantage du procédé de commande réside de façon remarquable dans l'obtention d'un volume constant de café après la sélection du type de café souhaité.

En outre, la durée d'écoulement de l'eau à travers la ou les doses de mouture est toujours optimale. Une telle constance se répercute directement sur la qualité du café préparé

Un autre avantage du procédé de commande réside dans sa simplicité et son automatisme. En effet, le système de préparation de café s'adapte automatiquement aux conditions et paramètres de préparation. L'utilisateur n'a pas à effectuer des réglages et des essais longs et compliqués pour obtenir une qualité optimale de café et ce même s'il utilise diverses variétés de café.

Un avantage remarquable du procédé de commande conforme à l'invention réside dans l'obtention dans la durée d'une qualité d'extraction optimale en s'affranchissant d'une part de modifier la granulométrie de la mouture et d'autre part d'effectuer un pesage systématique de la mouture.

En effet, une mesure de durée d'écoulement altérant le cas échéant une durée de prélèvement et de broyage des graines de café, permet contre toute attente d'assurer une constance dans la qualité gustative du café préparé.

### Brève description des figures

D'autres caractéristiques et avantages de l'invention apparaîtront plus clairement à la lecture de la description détaillée qui va suivre, faite en référence aux dessins annexés, donnés à titre d'exemples non limitatifs, dans lesquels :
- la figure 1, est une illustration schématique d'un exemple de réalisation d'un système de préparation de café conforme à l'invention,
- la figure 2, est une illustration d'un exemple de réalisation d'un porte-filtre utilisé dans un système de préparation de café conforme à l'invention, et
- la figure 3, est un exemple de logigramme fonctionnel illustrant la mise en oeuvre d'un procédé de commande conforme à l'invention, et
- la figure 4, est un autre exemple de logigramme illustrant la mise en oeuvre d'un procédé de commande conforme à l'invention.

### Mode(s) de réalisation de l'invention

Les éléments structurellement et fonctionnellement identiques et présents sur plusieurs figures distinctes, sont affectés d'une même référence numérique ou alphanumérique.

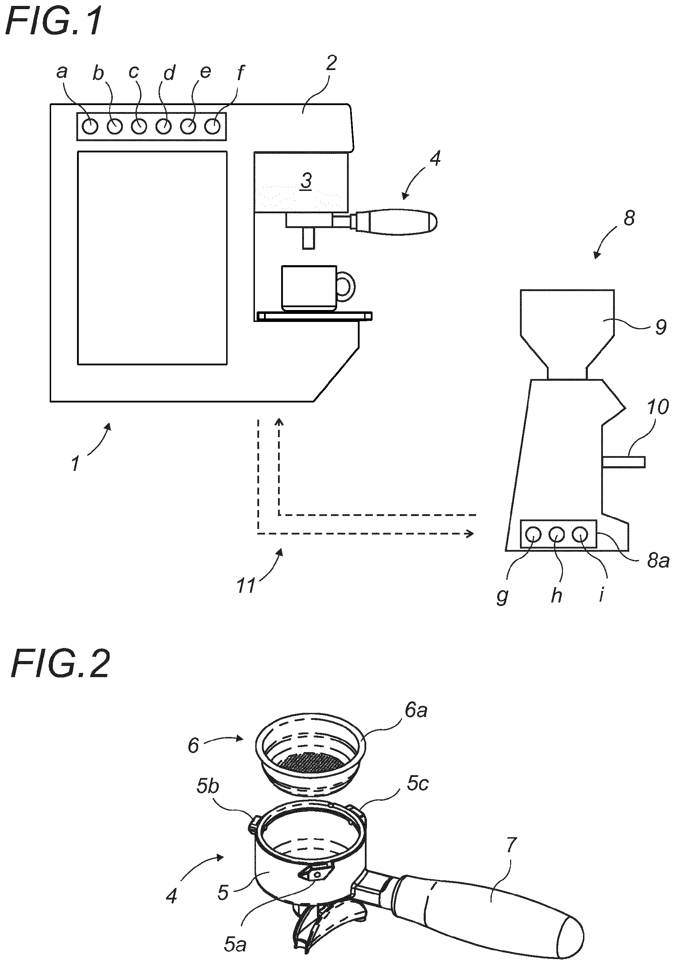

La figure 1, est une illustration schématique d'un exemple de réalisation d'un système de préparation de café. Le système de préparation de café une machine de préparation de café 1, laquelle est connue en tant que telle et ne sera donc pas décrite plus en détails. La machine de préparation de café 1 comporte au moins un groupe d'injection 2 pour injecter de l'eau chaude dans une dose de mouture.

La machine de préparation de café 1 comporte également un bloc mécanique présentant au moins un porte-coupe 3 sur lequel est monté de façon amovible un porte-filtre 4 destiné à être monté de façon amovible sur ledit porte-coupe 3.

La machine de préparation de café présente avantageusement une interface de commande 1a avec des boutons de commande a, b, c, d, e, f, correspondant chacun à un type de café et/ou une de mouture.

Un exemple de réalisation du porte-filtre 4 est illustré à la figure 2. Le porte-filtre 4 comporte une coupelle 5 dans laquelle est insérée une passoire 6 à rebord périphérique 6a destinée à contenir la mouture. La coupelle 5 se prolonge avec une poignée de manipulation 7.

La coupelle 5 présente également des ergots de maintien 5a, 5b et 5c s'engageant dans des gorges correspondantes, non représentées ménagées dans le porte-coupe 3, à des fins de solidarisation de ladite coupelle 5.

La machine de préparation de café 1 comprend avantageusement un débitmètre pour délivrer un volume d'eau prédéfinit qui va traverser la mouture de café.

La machine de préparation de café 1 comprend également un chronomètre permettant de mesurer et de visualiser la durée d'écoulement de l'eau à travers la mouture.

Le système de préparation de café 1 comprend également un moulin 8 permettant de broyer des graines de café stockées dans un réservoir 9.

Le moulin 8 intègre avantageusement un mécanisme électrique de broyage par rotation et un dispositif pour prélever une quantité donnée ou un poids donné de graines de café pour les amener au mécanisme de broyage. Ce dernier délivre à l'issue de l'opération de broyage une dose de mouture ou un poids donné de mouture. La granulométrie de la mouture peut avantageusement être modifiée en modifiant la vitesse de rotation du mécanisme de broyage et/ou la durée de l'opération de broyage.

Le moulin 8 comporte également un organe de distribution 10 permettant à l'utilisateur de récupérer la dose de mouture directement dans la passoire 6.

Le moulin 8 présente avantageusement une interface de commande 8a comportant des organes de commande g, h, i, correspondant respectivement à une de dose mouture, par exemple de 7g, 14g ou 21g.

Le moulin 8 est avantageusement relié à la machine de préparation de café 1 avec un système de communication incluant une liaison de communication 11 filaire ou non filaire notamment du genre BLUE TOOTH, WIFI ou WLAN ou autres.

Le moulin 8 et la machine de préparation de café 1 comportent une unité de commande respective intégrant notamment des moyens d'émission et de réception d'informations et/ou d'instructions.

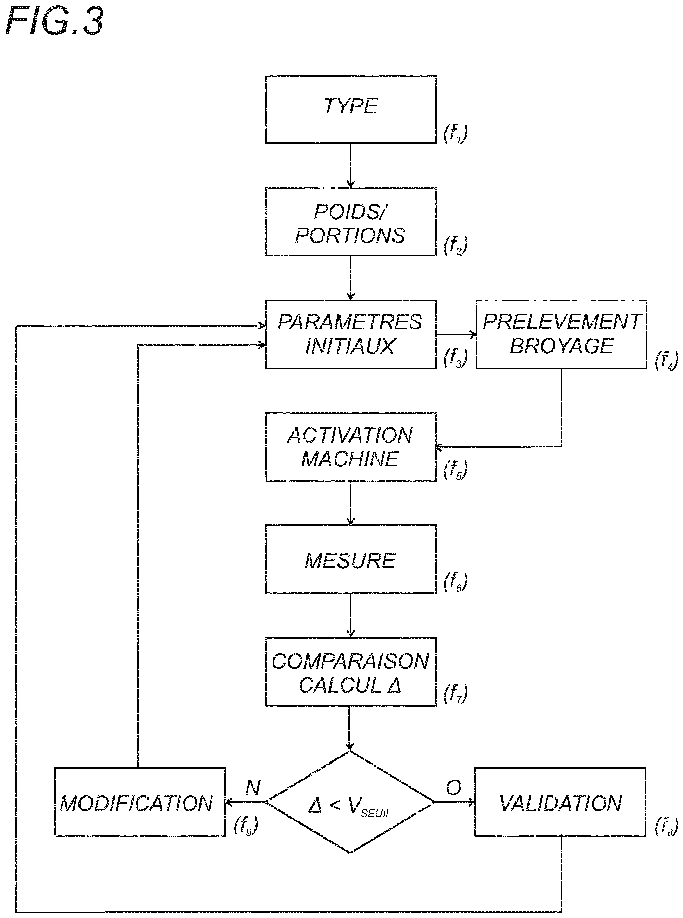

La figure 3 est un exemple de logigramme fonctionnel illustrant un exemple de mise en oeuvre du procédé de commande du système de préparation de café.

Le procédé de commande du système de préparation de café comprenant au moins une machine de préparation de café 1 et au moins un moulin 8 permet de broyer des graines de café contenues dans le réservoir 9 et fournir une dose de mouture. Le procédé de commande est détaillé ci-après.

Selon une étape f1), on sélectionne sur le moulin 8 à l'aide de organes de commande g, h, i, le type de café souhaité.

Selon une étape f2), on sélectionne sur le moulin 8, à l'aide d'organes de commande g, h, i, le poids correspondant de la mouture,

Selon une étape f3) on sélectionne les paramètres de fonctionnement initiaux du moulin 8. Cette sélection est effectuée automatiquement par l'unité de commande du moulin 8.

Ensuite selon une étape f4), on prélève la quantité correspondante de graines de café à partir du réservoir 9 et on lance l'opération de broyage des graines de café, en fonction des paramètres de fonctionnement initiaux du moulin 8, afin de fournir le poids de mouture souhaité. Les paramètres de fonctionnement initiaux ou standards sont enregistrés dans l'unité de commande du moulin 8.

Selon une étape f5), on utilise le moulin 8, plus précisément son unité de commande, pour transmettre à la machine de préparation de café 1, une instruction d'activation d'une touche de commande parmi les touches de commande a, b, c, d, e, f, de ladite machine de préparation de café 1. L'actionnement de la touche activée est alors possible pour mettre en marche le groupe d'injection 2, lequel injecte de l'eau chaude sous pression dans la mouture pendant une durée prédéterminée considérée comme optimale. A titre d'exemple, une telle durée optimale est de 25s pour un café expresso. La touche de commande activée permet une préparation de café compatible avec le type de café et le poids de la mouture initialement sélectionnés. Les autres touches de commande de la machine de préparation de café 1 sont ou restent inactivées.

Ensuite, selon une étape f6), on mesure le volume de café obtenu suite à l'actionnement de la touche de commande activée. Cette mesure est effectuée par exemple à l'aide d'un dispositif de pesée ou d'un dispositif optique ou autres.

Selon une étape f7), on compare la valeur mesurée du volume de café sous l'étape précédente f6), à une valeur optimale Vo préenregistrée dans l'unité de commande de la machine de préparation de café 1 et on détermine un écart Δ entre ces deux valeurs.

Selon les étapes f8) et f9), on pilote alors le fonctionnement du moulin 8 à partir de l'écart déterminé sous l'étape précédente f7).

Un tel pilotage consiste à valider (étape f8)) es paramètres de fonctionnement initiaux du moulin 8, lorsque l'écart Δ est inférieur à une valeur seuil Vseuil prédéterminée et à modifier (étape f9)) lesdits paramètres de fonctionnement initiaux du moulin 8, lorsque l'écart Δ est supérieur ou égal à la valeur seuil Vseuil prédéterminée. Cette dernière est avantageusement enregistrée dans l'unité de commande de la machine de préparation de café 1.

Selon un exemple de mise en oeuvre, le procédé de commande consiste à utiliser la liaison de communication 11 pour transmettre le cas échéant des instructions de fonctionnement correctives au moulin 8 à partir de la machine de préparation de café 1.

Selon un exemple de mise en oeuvre, le procédé consiste à utiliser l'unité de commande de la machine de préparation de café 1 et l'unité de commande du moulin 8, comprenant chacune des moyens de réception et d'émission d'informations et/ou d'instructions de commande.

Selon un exemple de mise en oeuvre, le procédé de commande consiste à fournir au moulin 8 des instructions de commandes correctives de manière à modifier pour des sélections données de type de café et de nombre de doses de mouture, les paramètres de fonctionnement du moulin 8 pour les opérations de broyages des graines de café.

Selon un exemple de mise en oeuvre, le procédé de commande consiste à utiliser des paramètres de fonctionnement la durée de l'opération de prélèvement et de broyage des graines de café pour agir sur la granulométrie et la densité de la mouture. Il est aussi possible d'ajouter à ces paramètres de fonctionnement le poids de la mouture selon un autre exemple de mise en oeuvre dudit procédé.

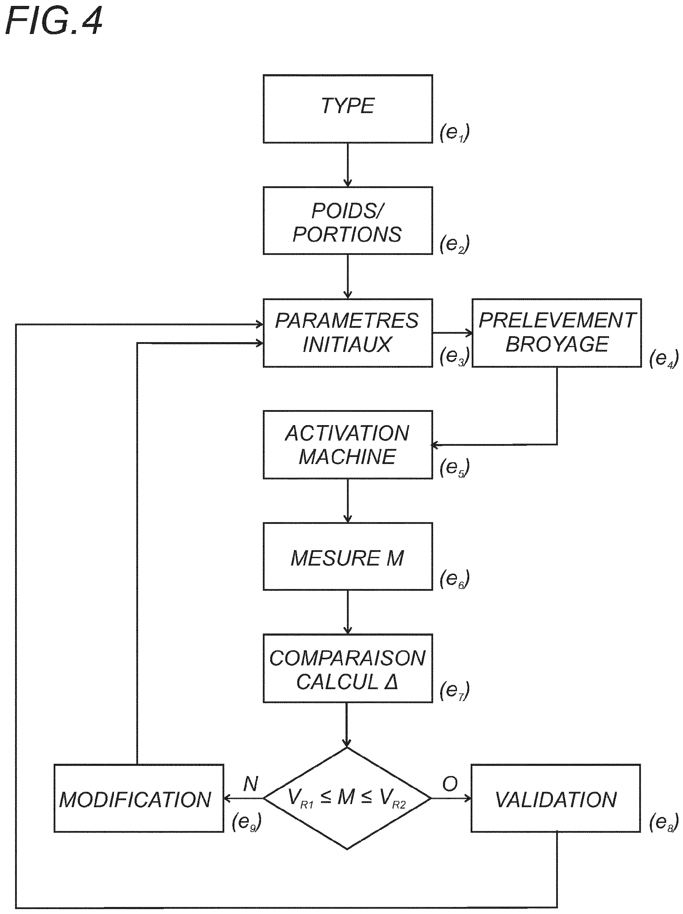

Selon un autre exemple de logigramme, illustré à la figure 4, le procédé de commande comprend les étapes suivantes.

Selon un étape e1), on sélectionne sur le moulin 8 à l'aide de organes de commande g, h, i le type de café souhaité.

Selon une étape e2), on sélectionne sur le moulin 8 à l'aide d'organes de commande g, h, i la les portions correspondant au nombre de doses mouture souhaité,

Ensuite, selon une étape e3), on sélectionne des paramètres de fonctionnement initiaux du moulin 8.

Selon une étape e4), on prélève la quantité correspondante de graines de café à partir du réservoir et on lance l'opération de broyage des graines de café, en fonction des paramètres de fonctionnement initiaux du moulin 8, afin de fournir la ou les doses de la mouture.

Selon une étape e5), on utilise le moulin 8 pour transmettre à la machine de préparation de café 1, une instruction d'activation d'une touche de commande a, b, c, d, e, f de ladite machine de préparation de café 1, l'actionnement de ladite touche activée étant compatible avec le type de café et le nombre sélectionné de doses de la mouture, les autres touches de commande de ladite machine de préparation de café 1 restant inactivées.

Ensuite, selon une étape e6), on mesure le temps d'écoulement M d'une quantité d'eau correspondant aux choix effectué sous e1 et e2), à travers la mouture, suite à l'actionnement de la touche de commande active.

On compare ensuite, selon une étape e7), la valeur mesurée M sous e6) à une plage de valeurs de temps de référence (VR1, VR2) préenregistrée et on détermine l'écart Δ entre la valeur mesurée M et la première valeur de référence VR1 si M est inférieure à VR1 ou entre la seconde valeur de référence VR2 et M si M est supérieure à VR2.

Un étape e8) et une étape e9) consistent alors à piloter le fonctionnement du moulin 8 en fonction de la comparaison effectuée et/ou de l'écart Δ déterminé sous e7).

Selon un exemple de mise en oeuvre, le procédé consiste à valider avec l'étape e8) les paramètres de fonctionnement du moulin 8, lorsque la valeur mesurée M est incluse dans la plage de référence (VR1, VR2) ou à modifier avec l'étape e9) lesdits paramètres de fonctionnement du moulin 8, lorsque la valeur mesurée M est inférieure à la première valeur de référence VR1 ou supérieure à la seconde valeur de référence VR2.

Selon un exemple de mise en oeuvre, le procédé de commande consiste à augmenter la quantité de mouture en augmentant la durée de prélèvement et de broyage des graines de café si la valeur mesurée M est inférieure à la première valeur de référence VR1 ou diminuer la quantité de mouture en augmentant la durée de prélèvement et de broyage des graines de café si la valeur mesurée M est supérieure à la seconde valeur de référence VR2.

L'augmentation ou la diminution de la quantité de mouture est par exemple une fonction mathématique donnant la durée de prélèvement et de broyage en fonction de la valeur de l'écart Δ.

Selon un autre exemple de mise en oeuvre, l'augmentation ou la diminution de la quantité de mouture est un tableau de correspondance préenregistré donnant les durées de prélèvement et de broyage en fonction de des valeurs de l'écart Δ. Un tel tableau de correspondance est par exemple construit empiriquement.

Dans l'hypothèse où le réservoir 9 serait vide et ne pourrait pas fournir une quantité suffisante de graines de café pour l'opération de broyage, cela se traduirait par une quantité moindre de café moulu dans le porte filtre après la durée de broyage prédéfinie. A titre d'exemple, si cela se traduit par une durée d'écoulement inférieure à 30 %d'une valeur seuil minimale, la machine de préparation de café va générer une alerte visuelle et/ou sonore.

Selon un exemple de mise en oeuvre, le procédé de commande comprend également des étapes de paramétrage ou de réglage initial du moulin 8. Ce réglage initial du moulin 8 est effectué au préalable de l'étape e1) consiste à déterminer l'écartement initial de deux meules du moulin 8, lesquelles vont broyer les graines de café. On procède ainsi à un tel réglage manuel de référence de cet écartement et on procède ensuite au broyage d'une quantité déterminée de graines de café pour obtenir un poids de mouture de référence. On mesure ensuite sur la machine de préparation de café 1, la durée d'écoulement d'une quantité déterminée d'eau à travers la mouture. Cette durée doit être incluse dans une plage de référence. Dans le cas contraire, on réajuste manuellement l'écartement des meules et on reprend la mesure. Une fois le réglage initial effectué, ce dernier reste inchangé, indépendamment de l'utilisation de diverses variétés ou natures de graines de café.

Le moulin 8 comprend avantageusement un organe mécanique à actionnement manuel, pour procéder au réglage de l'écartement des meules.

L'unité de commande du moulin 8 permet également d'activer le prélèvement et le broyage concomitant pendant des durées variables, lesquelles sont commandées manuellement, lors d'un fonctionnement autonome, par exemple lors du réglage initial, ou à distance par la machine de préparation de café 1 selon un exemple de fonctionnement connecté.

A titre d'exemples, le tableau ci-après donne, pour différents types de cafés (type recette), des valeurs de référence se rapportant au poids de la mouture, à la durée de broyage estimée, au volume de café dans une tasse, à la durée minimale d'écoulement (valeur de référence VR1) et à la durée maximale d'écoulement (valeur de référence VR2).

| Type Recette | Poids (gr) | Durée estimée (S) broyage moulin | Volume café (ml) Dans la tasse | Durée (S) mini écoulement VR1 | Durée (S) maxi écoulement VR2 |
|---|---|---|---|---|---|
| Expresso | 7 | 2,4 | 40 | 20 | 25 |
| Expresse x 2 | 14 | 4,5 | 80 (40 x 2) | 20 | 25 |
| Café | 8 | 2,7 | 60 | 25 | 30 |
| Café x 2 | 16 | 5 | 120 (60 x 2) | 25 | 30 |
| Café Long | 9 | 2,9 | 100 | 50 | 60 |
| Café Long x 2 | 21 | 5,2 | 200 (100 x 2) | 50 | 60 |

Ainsi lorsque la durée d'écoulement M mesurée ne se situe pas dans la plage de référence (optimale) VR1-VR2, le procédé de commande permet d'effectuer un ajustement du poids en prélevant plus ou moins de graines de café, en augmentant ou en diminuant la durée de prélèvement et de broyage, de manière à ramener la durée d'écoulement M dans la plage de référence.

Il est évident que la présente description ne se limite pas aux exemples explicitement décrits, mais comprend également d'autres modes de réalisation et/ou mise en oeuvre. Ainsi, une caractéristique technique décrite ou une étape de mise en oeuvre décrite, peut être remplacée respectivement par une caractéristique technique équivalente ou une étape équivalente, sans sortir du cadre et de la portée de l'invention définis par les revendications.

## Revendications

1. Procédé de commande d'un système de préparation de café comprenant au moins une machine de préparation de café et au moins un moulin pour broyer des graines de café contenues dans un réservoir et fournir au moins une dose d'une mouture destinée à la machine de préparation de café, laquelle est reliée au moulin par l'intermédiaire d'une liaison de communication filaire ou non filaire, comprenant les étapes :
e1) sélectionner sur le moulin à l'aide de organes de commande, le type de café souhaité,
e2) sélectionner sur le moulin à l'aide d'organes de commande la ou les portions correspondant au nombre de doses mouture souhaité,
e3) sélectionner des paramètres de fonctionnement initiaux du moulin,
e4) prélever la quantité correspondante de graines de café à partir du réservoir et lancer l'opération de broyage des graines de café, en fonction des paramètres de fonctionnement initiaux du moulin, afin de fournir la mouture,
e5) utiliser le moulin pour transmettre à la machine de préparation de café, une instruction d'activation d'une touche de commande de ladite machine de préparation de café, l'actionnement de ladite touche activée étant compatible avec le type de café et le nombre de doses de la mouture sélectionné, les autres touches de commande de ladite machine de préparation de café restant inactivées,
e6) mesurer le temps d'écoulement (M) d'une quantité d'eau correspondant aux choix effectué sous e1 et e2), à travers la mouture, suite à l'actionnement de la touche de commande active,
e7) comparer la valeur mesurée M sous e6) à une plage de valeurs de temps de référence (VR1, VR2) préenregistrée et déterminer l'écart Δ entre la valeur mesurée (M) et la valeur de référence (VR1) si (M) est inférieure à (VR1 ou entre (VR2) et (M) si (M) est supérieure à (VR2), et
e8)-e9) piloter le fonctionnement du moulin en fonction de la comparaison effectuée et/ou de l'écart (Δ) déterminé sous e7), le pilotage consistant à augmenter la quantité de mouture en augmentant la durée de prélèvement et de broyage des graines de café si la valeur mesurée (M) est inférieure à la première valeur de référence (VR1) ou diminuer la quantité de mouture en diminuant la durée de prélèvement et de broyage des graines de café si la valeur mesurée M est supérieure à la seconde valeur de référence (VR2).

2. Procédé de commande selon la revendication 1, **caractérisé en ce qu'**il consiste à valider les paramètres de fonctionnement du moulin (8) lorsque la valeur mesurée (M) est incluse dans la plage de référence (VR1, VR2) ou à modifier lesdits paramètres de fonctionnement du moulin (8) lorsque la valeur mesurée (M) est inférieure à la première valeur de référence (VR1) ou supérieure à la seconde valeur de référence (VR2).

3. Procédé de commande selon la revendication 1, **caractérisé en ce que** l'augmentation ou la diminution de la quantité de mouture est une fonction mathématique donnant la durée de prélèvement et de broyage en fonction de la valeur de l'écart (Δ).

4. Procédé de commande selon la revendication 1, **caractérisé en ce que** l'augmentation ou la diminution de la quantité de mouture est un tableau de correspondance préenregistré donnant les durées de prélèvement et de broyage en fonction de la valeur de l'écart (Δ).

5. Procédé de commande selon l'une quelconque des revendication 1 à 4, **caractérisé en ce qu'**il consiste à utiliser la liaison de communication pour transmettre des instructions de fonctionnement au moulin à partir de la machine de préparation de café.

6. Procédé de commande selon l'une quelconque des revendications 1 à 5, **caractérisé en ce qu'**il consiste à utiliser une unité de commande de la machine de préparation de café et une unité de commande du moulin, comprenant chacune des moyens de réception et d'émission d'informations et/ou d'instructions de commande.

7. Procédé de commande selon la revendication 2, **caractérisé en ce qu'**il consiste à fournir au moulin des instructions de commandes correctives de manière à modifier pour des sélections données de type de café et de poids de mouture, les paramètres de fonctionnement du moulin pour les opérations de broyages des graines de café.

8. Procédé de commande selon la revendication 4, **caractérisé en ce qu'**il consiste à utiliser des paramètres de fonctionnement comprenant également le poids de la mouture.

9. Système de préparation de café comprenant au moins une machine de préparation de café (1) comportant un groupe d'injection (2), un bloc mécanique et au moins un porte-filtre (4) contenant au moins une dose de mouture, monté de façon amovible sur un porte-coupe (3) du bloc mécanique, une unité de commande pour piloter le fonctionnement de ladite machine de préparation de café (1), au moins un moulin (8) pour broyer les graines de café et fournir ainsi la mouture, une unité de commande pour piloter le fonctionnement du moulin (8), ledit système comprenant aussi un système de communication établissant une liaison de communication filaire ou non filaire entre ladite machine de préparation de café (1) et ledit moulin (8), de manière à transmettre des informations et/ou des instructions de la machine de préparation de café (1) au moulin (8) et du moulin (8) à la machine de préparation de café (1), l'unité de commande de la machine de préparation de café (1) et l'unité de commande du moulin (8) étant configurées pour mettre en oeuvre le procédé de commande selon l'une quelconque des revendications 1 à 8, la machine de préparation de café (1) comprenant un dispositif de mesure pour mesurer la durée d'injection ou la durée d'écoulement d'une quantité déterminée d'eau à travers la mouture préparée par le moulin (8) ainsi qu'un débitmètre pour délivrer le volume d'eau adéquat devant traverser la mouture.

10. Système selon la revendication 9, **caractérisé en ce que** le moulin (8) comporte un mécanisme de broyage rotatif associé à un dispositif de prélèvement intégrant un dispositif de pesée pour prélever un poids déterminé de graines de café destinées au mécanisme de broyage.

11. Système selon la revendication 9 ou 10, **caractérisé en ce que** les unités de commande du moulin (8) et de la machine de préparation de café (1) comprennent chacune une carte électronique comportant une micro-mémoire dans laquelle sont stockés des paramètres physiques et/ou des paramètres de fonctionnement et/ou des valeurs de références (VR1), (VR2) et/ou des durées de référence d'écoulement d'eau à travers la mouture.

12. Produit programme d'ordinateur comprenant des instructions de code de programme, enregistrées sur un support lisible par un ordinateur et qui conduisent le système selon l'une quelconque des revendications 9 à 11 à exécuter les étapes du procédé selon l'une quelconque des revendications 1 à 8.

## Patentansprüche

1. Steuerungsverfahren für ein Kaffeezubereitungssystem mit mindestens einer Maschine für die Kaffeezubereitung und mindestens einer Mühle zum Mahlen der Kaffeebohnen, die sich in einem Behälter befinden und zur Abgabe mindestens einer Dosis gemahlenen Kaffees, an die Kaffeezubereitungsmaschine, die mit der Mühle über eine drahtgebundene oder drahtlose Kommunikation verbunden ist, umfassend die Schritte
- e1) Auswahl des gewünschten Kaffeetyps an der Mühle mittels Steuerorganen,
- e2) Auswahl der Portion oder Portionen, die der Anzahl Dosen an gemahlenem Pulver entsprechen, an der Mühle mittels Steuerorganen,
- e3) Auswahl der ursprünglichen Funktionsparameter der Mühle,
- e4) Entnahme der entsprechenden Menge Kaffeebohnen aus dem Behälter und Starten des Zerkleinerungsvorgangs der Kaffeebohnen, in Abhängigkeit von den ursprünglichen Funktionsparametern der Mühle, um das Kaffeepulver zu liefern,
- e5) die Mühle nutzen, um an die Kaffeezubereitungsmaschine eine Anweisung zur Betätigung einer Steuertaste dieser Kaffeezubereitungsmaschine zu senden, die Betätigung dieser aktivierten Taste muss dabei mit dem Kaffeetyp und der ausgewählten Anzahl Dosen an Kaffeepulver vereinbar sein, die anderen Steuertasten der erwähnten Kaffeezubereitungsmaschine werden nicht aktiviert,
- e6) Messung der Durchlaufzeit (M) einer Wassermenge durch das Kaffeepulver entsprechend der unter e1) und e2) getätigten Auswahl infolge der Betätigung der aktiven Steuertaste,
- e7) Vergleich des unter e6) gemessenen Wertes M mit einem Bereich von vorher aufgezeichneten Bezugszeitwerten (VR1, VR2) und Bestimmung des Abstandes A zwischen dem gemessenen Wert (M) und dem Bezugswert (VR1), wenn (M) kleiner als (VR1) ist oder zwischen (VR2) und (M) wenn (M) größer als (VR2) ist und
- e8)-e9) Steuerung des Betriebs der Mühle entsprechend dem erfolgten Vergleich und/ oder dem Abstand (A) bestimmt unter e7), wobei die Steuerung darin besteht, die Menge an Kaffeepulver zu erhöhen durch Erhöhung der Entnahme- und Zerkleinerungsdauer der Kaffeebohnen, wenn der gemessene Wert (M) kleiner ist als der erste Bezugswert (VR1) oder die Menge an Kaffeepulver zu verringern durch Verringerung der Entnahmedauer und Zerkleinerung der Kaffeebohnen, wenn der gemessene Wert M höher ist als der zweite Bezugswert (VR2).

2. Steuerungsverfahren nach Anspruch 1, **dadurch gekennzeichnet, dass** es darin besteht, die Funktionsparameter der Mühle (8) zu validieren, wenn der gemessene Wert (M) innerhalb des Bezugsbereichs (VR1, VR2) liegt, oder diese Funktionsparameter der Mühle (8) zu ändern, wenn der gemessene Werts (M)) kleiner ist als der erste Bezugswert (VR1) oder größer als der zweite Bezugswert (VR2).

3. Steuerungsverfahren nach Anspruch 1, **dadurch gekennzeichnet, dass** die Erhöhung oder Verringerung der Kaffeepulvermenge eine mathematische Funktion ist, die die Entnahme- und Zerkleinerungsdauer in Abhängigkeit vom Wert des Abstandes (A) angibt.

4. Steuerungsverfahren nach Anspruch 1, **dadurch gekennzeichnet, dass** die Erhöhung oder Verringerung der Kaffeepulvermenge eine vorher aufgezeichnete Korrelationstabelle ist, die die Entnahme- und Zerkleinerungsdauer in Abhängigkeit vom Wert des Abstandes (A) angibt.

5. Steuerungsverfahren nach irgendeinem der vorstehenden Ansprüche 1 bis 4, **dadurch gekennzeichnet, dass** es darin besteht, die Kommunikationsverbindung zu nutzen, um der Mühle von der Kaffeezubereitungsmaschine aus, Betriebsanweisungen zu geben.

6. Steuerungsverfahren nach irgendeinem der vorstehenden Ansprüche 1 bis 5, **dadurch gekennzeichnet, dass** es darin besteht, eine Steuereinheit der Kaffeezubereitungsmaschine und eine Steuereinheit der Mühle zu nutzen, die jede Mittel zum Empfangen und Senden von Steuerinformationen und/ oder Steueranweisungen enthalten.

7. Steuerungsverfahren nach Anspruch 2, **dadurch gekennzeichnet, dass** es darin besteht, an die Mühle korrigierende Steueranweisungen zu senden, um so für eine gegebene Auswahl von Kaffeetyp und Kaffeepulvergewicht, die Funktionsparameter der Mühle für die Zerkleinerungsoperationen der Kaffeebohnen zu ändern.

8. Steuerungsverfahren nach Anspruch 4, **dadurch gekennzeichnet, dass** es darin besteht, Funktionsparameter zu nutzen, die auch das Gewicht des Kaffeepulver umfassen.

9. Kaffeezubereitungssystem mit mindestens einer Kaffeezubereitungsmaschine (1), die ein Einspritzaggregat (2), einen mechanischer Block und mindestens einen Filterhalter (4) umfasst, der mindestens eine Dosis Kaffeepulver enthält, abnehmbar montiert auf einem Tassenhalter (3) des mechanischen Blocks, einer Steuereinheit zur Steuerung des Betriebs dieser Kaffeezubereitungsmaschine (1), mindestens einer Mühle (8) zur Zerkleinerung der Kaffeebohnen und somit zur Lieferung des Kaffeepulvers, einer Steuereinheit zur Steuerung des Betriebs der Mühle (8), dieses System umfasst auch ein Kommunikationssystem, das eine drahtgebundene oder drahtlose Kommunikationsverbindung zwischen dieser Kaffeezubereitungsmaschine (1) und dieser Mühle (8) herstellt, um so Informationen und/ oder Anweisungen von der Kaffeezubereitungsmaschine (1) an die Mühle (8) und von der Mühle (8) an die Kaffeezubereitungsmaschine (1) zu übertragen, die Steuereinheit der Kaffeezubereitungsmaschine (1) und die Steuereinheit der Mühle (8) sind dabei dazu konfiguriert, den Steuerungsprozess nach irgendeinem der Ansprüche 1 bis 8 umzusetzen, die Kaffeezubereitungsmaschine (1) enthält dabei eine Messvorrichtung um die Einspritzdauer oder die Durchlaufzeit einer bestimmten Menge Wasser durch das von der Mühle (8) vorbereitete Kaffeepulver zu messen, sowie einen Durchlaufmesser, um die angemessene Wassermenge zu liefern, die durch das Kaffeepulver hindurchfließen muss.

10. System nach Anspruch 9, **dadurch gekennzeichnet, dass** die Mühle (8) einen drehbaren Zerkleinerungsmechanismus enthält, verbunden mit einer Entnahmevorrichtung, die eine Wiegevorrichtung enthält, um ein bestimmtes Gewicht an Kaffeebohnen für den Zerkleinerungsmechanismus zu entnehmen.

11. System nach Anspruch 9 oder 10, **dadurch gekennzeichnet, dass** die Steuereinheiten der Mühle (8) und der Kaffeezubereitungsmaschine (1) jeweils eine elektronische Platine enthalten, die einen Mikrospeicher enthält, in dem die physikalischen Parameter und/ oder die Betriebsparameter und/ oder die Bezugswerte (VR1), (VR2) und/ oder die Bezugszeiten für das Durchlaufen von Wasser durch das Kaffeepulver hindurch gespeichert sind.

12. Computerprogramm mit Programm- Code- Anweisungen, aufgezeichnet auf einem computerlesbaren Träger und die das System veranlassen, nach irgendeinem der vorstehenden Ansprüche 9 bis 11 die Schritte des Verfahrens, nach irgendeinem der vorstehenden Ansprüche 1 bis 8 auszuführen.

## Claims

1. A method of controlling a coffee brewing system comprising at least one coffee brewing machine and at least one grinder for grinding coffee beans contained in a reservoir and providing at least one dose of a grind for the coffee brewing machine, which is connected to the grinder via a wired or wireless communication link, comprising the steps of:
e1) selecting on the grinder with control members, the type of coffee desired,
e2) selecting on the grinder with control members the portion or portions corresponding to the desired number of grind doses,
e3) selecting initial operating parameters of the mill,
e4) collecting the corresponding quantity of coffee beans from the reservoir and starting the operation of grinding the coffee beans, according to the initial operating parameters of the grinder, in order to provide the grind,
e5) using the grinder to transmit to the coffee brewing machine an instruction for activating a control key of said coffee brewing machine, the actuation of said activated key being compatible with the type of coffee and the number of doses of the selected grind, the other control keys of said coffee brewing machine remaining inactivated,
e6) measuring the flow time (M) of an amount of water corresponding to the choices made under e1 and e2), through the grind, following the operation of the active control key,
e7) comparing the measured value M at e6) with a prerecorded range of reference time values (VR1, VR2) and determining the deviation Δ between the measured value (M) and the reference value (VR1) if (M) is less than (VR1) or between (VR2) and (M) if (M) is greater than (VR2), and
e8)-e9) controlling the operation of the grinder as a function of the comparison carried out and/or of the deviation (Δ) determined at e7), the control consisting of increasing the quantity of grind by increasing the duration of collecting and grinding the coffee beans if the measured value (M) is less than the first reference value (VR1) or decreasing the quantity of grind by decreasing the duration of collecting and grinding the coffee beans if the measured value M is greater than the second reference value (VR2).

2. The control method as claimed in claim 1, **characterised in that** it consists of validating the operating parameters of the grinder (8) when the measured value (M) is included in the reference range (VR1, VR2) or of modifying said operating parameters of the grinder (8) when the measured value (M) is less than the first reference value (VR1) or greater than the second reference value (VR2).

3. The control method according to claim 1, **characterised in that** the increase or decrease in the amount of grind is a mathematical function giving the duration of collecting and grinding as a function of the value of the deviation (A).

4. The control method according to claim 1, **characterised in that** the increase or decrease in the amount of grind is a prerecorded correspondence table giving the collecting and grinding durations as a function of the value of the deviation (A).

5. The control method according to any one of claims 1 to 4, **characterised in that** it consists in using the communication link to transmit operating instructions to the grinder from the coffee brewing machine.

6. The control method as claimed in any one of claims 1 to 5, **characterised in that** it consists of using a control unit of the coffee preparation machine and a control unit of the grinder, each comprising means for receiving and transmitting information and/or control instructions.

7. The control method as claimed in claim 2, **characterised in that** it consists of supplying the grinder with corrective control instructions so as to modify, for given selections of coffee type and grinding weight, the operating parameters of the grinder for the coffee bean grinding operations.

8. The control method as claimed in claim 4, **characterised in that** it consists of using operating parameters also comprising the weight of the grind.

9. A coffee preparation system comprising at least one coffee brewing machine (1) comprising an injection unit (2), a mechanical block and at least one filter holder (4) containing at least one dose of grind, removably mounted on a cup holder (3) of the mechanical block, a control unit for controlling the operation of said coffee brewing machine (1), at least one grinder (8) for grinding the coffee beans and thus supplying the grind, a control unit for controlling the operation of the grinder (8), said system also comprising a communication system establishing a wired or wireless communication link between said coffee brewing machine (1) and said grinder (8), so as to transmit information and/or instructions from the coffee brewing machine (1) to the grinder (8) and from the grinder (8) to the coffee brewing machine (1), the control unit of the coffee brewing machine (1) and the control unit of the grinder (8) being configured to carry out the control method according to any one of claims 1 to 8, the coffee brewing machine (1) comprising a measuring device for measuring the injection time or the flow time of a determined quantity of water through the grind prepared by the grinder (8) and a flowmeter for delivering the appropriate volume of water to be passed through the grind.

10. The system according to claim 9, **characterised in that** the grinder (8) comprises a rotary grinding mechanism associated with a collecting device integrating a weighing device for collecting a determined weight of coffee beans intended for the grinding mechanism.

11. System according to Claim 9 or 10, **characterised in that** the control units of the grinder (8) and of the coffee brewing machine (1) each comprise an electronic card comprising a micro memory in which are stored physical parameters and/or operating parameters and/or reference values (VR1), (VR2) and/or reference durations of water flow through the grind.

12. A computer program product comprising program code instructions recorded on a computer readable medium and which cause the system according to any one of claims 9 to 11 to perform the steps of the method according to any one of claims 1 to 8.
